# EUROPEAN PATENT SPECIFICATION

(11) **EP 2 699 051 B1**
(45) Date of publication and mention of the grant of the patent: **15.05.2019**
(21) Application number: 12180907.3
(22) Date of filing: 17.08.2012
(51) Int. Cl.: H04W 88/08

(54) **Method and system for the distribution of the control and data plane in Wireless Local Area Network Access Points**
Verfahren und System zur Verteilung der Steuerungs- und Datenebene in einem WLAN-Zugangspunkt
Procédé et système pour la distribution de la couche de contrôle et de données aux points d'accès d'un réseau local sans fil

(43) Date of publication of application: 19.02.2014
(73) Proprietor: Deutsche Telekom AG, 53113 Bonn (DE)
(72) Inventor: Bayer, Nico, 61231 Bad Nauheim (DE); Einsiedler, Hans-Joachim, 13189 Berlin (DE); Peylo, Christoph, 49401 Damme (DE); Dely, Peter, 65353 Karlstad (SE); Kassler, Andreas, 65635 Karlstad (SE); Vestin, Jonathan, 65633 Karlstad (SE)
(74) Representative: Vossius & Partner Patentanwälte Rechtsanwälte mbB

(56) References cited:
- WO-A2-98/24256
- US-A1- 2002 103 001
- TSUYOSHI HAMAGUCHI ET AL: "A Framework of Better Deployment for WLAN Access Point Using Virtualization Technique", ADVANCED INFORMATION NETWORKING AND APPLICATIONS WORKSHOPS (WAINA), 2010 IEEE 24TH INTERNATIONAL CONFERENCE ON, IEEE, PISCATAWAY, NJ, USA, 20 April 2010 (2010-04-20), pages 968-973, XP031687265, ISBN: 978-1-4244-6701-3
- OTHMEN BRAHAM ET AL: "Virtual wireless network urbanization", NETWORK OF THE FUTURE (NOF), 2011 INTERNATIONAL CONFERENCE ON THE, IEEE, 28 November 2011 (2011-11-28), pages 31-34, XP032093092, DOI: 10.1109/NOF.2011.6126678 ISBN: 978-1-4577-1605-8
- YONG LI ET AL: "ExpoNET: A Flexible Platform for Concurrent Experiments on Programmable Infrastructure", GLOBAL TELECOMMUNICATIONS CONFERENCE (GLOBECOM 2011), 2011 IEEE, IEEE, 5 December 2011 (2011-12-05), pages 1-5, XP032097681, DOI: 10.1109/GLOCOM.2011.6133647 ISBN: 978-1-4244-9266-4
- Nick McKeown ET AL: "OpenFlow: Enabling Innovation in Campus Networks", , 14 March 2008 (2008-03-14), pages 1-6, XP55002028, Retrieved from the Internet: URL:http://www.openflow.org/documents/open flow-wp-latest.pdf [retrieved on 2011-07-05]
- PETER DELY ET AL: "OpenFlow for Wireless Mesh Networks", COMPUTER COMMUNICATIONS AND NETWORKS (ICCCN), 2011 PROCEEDINGS OF 20TH INTERNATIONAL CONFERENCE ON, IEEE, 31 July 2011 (2011-07-31), pages 1-6, XP032049286, DOI: 10.1109/ICCCN.2011.6006100 ISBN: 978-1-4577-0637-0

## Description

### Technical Field

The present invention relates to a method and a system for distributing the control plane and data plane of wireless Access Points, APs, in a Wireless Local Area Network, WLAN, in particular to a method and system to isolate and control the flow of data and control messages in a wireless local area network. In the present invention, an AP comprises a Virtual Access Point, VAP, and a physical access point which comprises one or more so called Wireless Termination Points - WTP. The VAP and the WTP are connected via a distribution network. The VAP generates Medium Access Control, MAC, layer frames. The WTP forwards MAC layer frames between VAPs and user stations. An isolation layer between VAPs and the WTPs allows for isolation of traffic and network virtualization.

### Technical Background

WLANs have become tremendously popular to provide wireless access to local area networks or the Internet. The vast majority of those networks is based on the IEEE 802.11 standards. An IEEE 802.11 network can comprise one or several basic service sets, BSS. A collection of interconnected BSS is called extended service set (ESS). A BSS comprises one access point, AP, and one or several associated stations, STA. STAs communicate with APs using radio transmissions. An AP allows STA to connect to a wired network, for example a local area network or the Internet.

Usually an AP comprises of one or more wireless interface cards, one or more wired interface cards and a software stack that manages those cards. The software stack typically manages radio parameters such as transmission power, user authentication, encryption settings and the forwarding of data frames between the interface cards.

This architecture makes APs complex and difficult to manage. A considerable effort has been undertaken by academia, industry and standardization bodies to simplify this architecture. For example, Control and Provisioning of Wireless Access Points, CAPWAP, RFC 5415, IETF, specifies an AP-controller architecture in which a central AP controller manages several APs. The AP controller uses the CAPWAP protocol to discover APs, to distribute operating system images, configuration settings. Furthermore, the AP controller generates certain MAC frames, for example Authentication Response frames. Other frame types, such as Data frames, are generated at the AP. With CAPWAP, both the AP and the AP controller keep information about the association state of stations.

The AP controller of CAPWAP hence performs many control plane tasks that are traditionally handled by the APs themselves. Drawbacks of CAPWAP are that it requires specialized management software and that it incorporates no mechanism for provisioning of virtual networks.

"A Framework of Better Deployment for WLAN Access Point using Virtualization Technique" by Tsuyoshi Hamaguchi et al. discloses a system, in which a physical access point hosts several virtual machines through operating system virtualization. Through a hypervisor hosted on the AP, several virtual machines can access the WLAN interfaces of the physical AP. The hypervisor exposes a virtual Ethernet device to the virtual machines. Radio settings are controlled by the hypervisor, but not within the virtual machine.

"Virtual Wireless Network Urbanization" by Othmen Braham et al. discloses a very similar system. One physical access point hosts several virtual access points. But also here, radio configuration of the channel and the SSID are done in the privilege domain DOM0, i.e. the host of the virtual machine.

"SplitAP: Leveraging Wireless Network Virtualization For Flexible Sharing Of WLANs" by Gautam Bhanage et al. presents a similar virtualization system, in which one physical AP can host several virtual AP. The management is a control module residing at the access point.

Remote Radio Heads, as for example disclosed in United States Patent Application 20110310881, are remote radio transceivers that perform analog/digital conversation of signals and forward them to a central processing unit via for example a fiber backhaul network. Remote Radio Heads are operating on the PHY layer of the OSI network reference model.

WO9824256 A2 refers to a wideband digital architecture for use in radio communications systems. Hamaguchi, T. et al, "A framework of better deployment for wlan access point using virtualization technique", Advanced information networking and applications workshops (waina), 2010 IEEE 24th international conference on, IEEE, piscataway, nj, USA, (20100420) refers to a Virtual Access Point (VAP) being a logical access point constructed by virtualization technique and independently keeping the configuration of wireless network in physical access point. VAP moves to another physical access point with executing live migration.

### Summary of the Invention

The present invention describes a system and a method as defined in the independent claims that overcomes the problem with state-of the art approaches to the separation and distribution of the control and data plane and thereby allows for easy provisioning of virtual networks and compatibility with current management software. In particular, through the use of virtual WLAN interfaces in the virtual access point, that expose the same API as real WLAN interfaces, compatibility to current management software is established. Furthermore, an isolation layer ensures data and control traffic of virtual networks operated simultaneously on one WTP so that they do not interfere with each other.

The present invention provides a system for providing of control plane and data plane in a WLAN, comprising: a physical access point providing data connectivity for a user equipment, at least one virtual access point controlling the data connectivity, and an isolation layer connected with the physical access point and the virtual access point. The isolation layer is configured to handle data frames in the data plane and control messages in the control plane between the physical access point and the virtual access point.

While the Remote Radio Heads are operating on the PHY layer of the OSI network reference model, the present invention is situated at the Data Link or Medium Access Layer of the OSI network reference model. In other words, the system is configured to distribute the control plane and the data plane at the Data Link Layer or the Medium Access Layer according to the OSI network reference model. The term "frame" typically is used to describe a data unit on layer 2 of the OSI reference model, whereas "packet" refers to layer 3, e.g. "MAC frame" but "IP packet".

According to a further aspect, the present invention provides a method for providing of control plane and data plane in a WLAN, wherein the method comprises the steps of: providing data connectivity for a user equipment by a physical access point; controlling the data connectivity by at least one virtual access point; connecting an isolation layer with the physical access point and the virtual access point; and handling data frames in the data plane and control messages in the control plane between the physical access point and the virtual access point, by the isolation layer.

Preferably, the isolation layer is connected with the physical access point via a first tunnel and a first distribution network, and the isolation layer is connected with the virtual access point via a second tunnel and a second distribution network.

Preferably, the physical access point comprises one or more wireless termination points, and the virtual access point is running on one or more virtual machine hosts.

Preferably, the isolation layer comprises an isolation switch, an isolation switch controller. The isolation switch is connected with the isolation switch controller via a switch control connection using a switch control protocol. Moreover, the isolation switch is configured to perform said handling of the data frames and the control messages according to rules defined by the isolation switch controller. More preferably, the rules are defined by applications executed on the isolation switch controller.

Preferably, the wireless termination point comprises: at least one wireless network interface card and a tunnel endpoint being connected via a bridge. The wireless network interface card is connected to a network card control daemon.

Preferably, the virtual access point is configured to add a frame header to the data frames.

The frame header comprises a basic transmission instruction for transmitting the data frames by the physical access point. The term "header" should refer to a part of a frame or a packet, that typically carries addressing information. Moreover, the physical access point is configured to receive the data frames including the frame header from the isolation layer and to transmit that to the user equipment according to the basic transmission instruction.

Preferably, the virtual access point is configured to further add a control header to the data frames, wherein the control header comprises an extended transmission instruction for transmitting the data frames by the physical access point. The physical access point is configured to receive the control header from the isolation layer and to transmit the data frames according to the extended transmission instruction.

Preferably, the physical access point is configured to remove the control header prior to sending the data frames to the user equipment.

Hereinafter, the transmitting of the data frames by means of the basic and extended transmission instructions in the headers will be explained in more detail. The virtual access point adds a MAC frame header to the data packet, i.e. making a MAC frame out of the data packet. The MAC frame header may be constructed in accordance with the IEEE 802.11 standard and includes information such as source and destination MAC address, i.e. the basic transmission instruction. In addition, a control header may be added. The control header includes information about how the packet should be transmitted, i.e., the extended transmission instruction, e.g. which modulation scheme should be used. The control header is interpreted and removed at the physical access point. The operations with the headers may be illustrated in a schematic diagram below:
A. Input virtual access point: 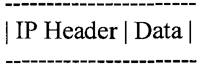
B. Output virtual access point: 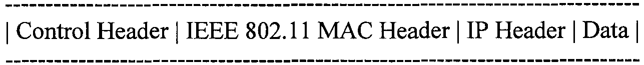
C. Input and output isolation switch: 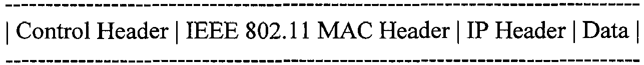
D. Input physical access point: 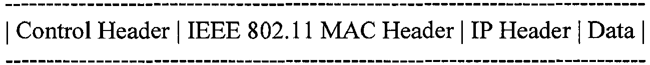
E. Output physical access point (sent over the wireless medium):

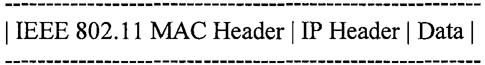

Preferably, the virtual access point comprises a virtual wireless network interface card which creates the control messages including operational change instruction such as channel change, and forwards the control messages to the isolation switch controller. The isolation switch controller is configured to process the control messages according to a predetermined operation policy.

Preferably, the virtual wireless network interface card comprises an Application Programming Interface enabling communication with additional software components.

Preferably, the isolation switch is configured to distinguish the control messages and the data frame, and to forward the control messages to the switch controller. The switch controller is configured to process the control messages, and if allowed, to forward it to the physical access point for performing the operational change.

In comparison with the frame header or the control header, the control messages here are separate messages created to configure the wireless card at the physical access point. The control messages are related to more global configuration settings, which is usually not performed on a per frame basis. Thus, the control messages are not attached to any data frames, but exist on their own. A control message can for example be "change channel to channel 2". This message can be created by the virtual WLAN driver at the virtual access point and then sent to the isolation switch. The isolation switch can distinguish normal data frames and the control messages, which is shown in the above schematic diagram under item C. The control messages are forwarded to the isolation switch controller, which then checks the permissions and, if allowed, forwards the control message to the control daemon at the physical access point. The control daemon then performs the action specified in the control message, e.g. in the present example: change the channel of the WLAN card to channel 2.

While in CAPWAP the central control unit, i.e., access point controller, exercises full control over the connected WTP, in the present invention an additional layer is placed between virtual AP and the WTP. The isolation switch and the isolation switch controller allow a fine grained management of data and control messages, which enables new applications. Furthermore, by the means of the control header, the present invention enables the virtual AP to specify in detail the transmission parameters of each frame. Such packet level transmission control is not possible in CAPWAP.

In summary, by introducing the isolation layer, the present invention enables seamlessly change of the physical wireless termination point during transmission of the data frames.

### Brief Description of the Figures

The present invention will be hereinafter described in more detail in accordance with the accompanied Figures.
Figure 1 depicts a block diagram of an embodiment of a system according to a preferred embodiment of the present invention.
Figure 2 depicts a block diagram of an embodiment of a virtual AP according to a preferred embodiment of the present invention.
Figure 3 depicts a block diagram of an embodiment of a WTP according to a preferred embodiment of the present invention.
Figure 4 depicts an exemplary sequence diagram of control plane traffic according to the present invention.
Figure 5 depicts an exemplary sequence diagram of data plane traffic according to the present invention.

### Detailed Description of the Invention

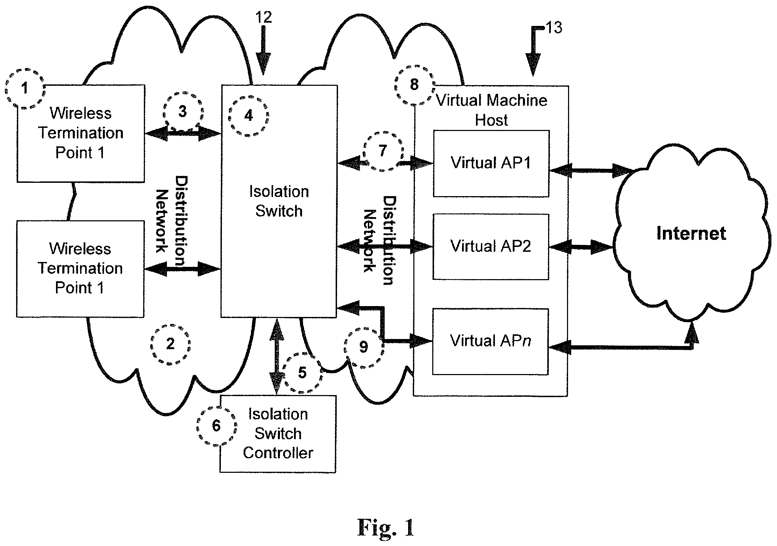

As shown in Figure 1, the system according to the present invention comprises one or several wireless termination points 1, i.e. WTPs. The wireless termination points are connected via first tunnels 3 and a first distribution network 2 to an isolation switch 4. The isolation switch forwards data and control messages according to the rules specified by an isolation switch controller 6 through a control connection 5. Control messages are to configure WLAN cards on a WTP. Data messages carry data that is exchanged between user stations and a VAP. The isolation switch 4 is furthermore connected via a second distribution network 9 and second tunnels 7 to one or several virtual machine hosts 8. Each virtual machine host comprises one or several (n) virtual access points VAP1, VAP2, ...VAPn. The first and second tunnels between the entities allow transporting WLAN MAC frames and control messages over fixed packet or circuit switched networks. In an embodiment of the invention the tunnel is using the Generic Encapsulation Protocol, GRE.

The first and the second distribution network 2, 9 can be any data communication network, such as a local area network or the Internet. Preferably it supports the Internet Protocol, IP. There may be also virtual networks within the same physical network.

### Isolation Switch

The isolation switch 4 handles the forwarding of traffic between VAPs and WTPs. It includes a switch table, which specifies rules and actions. A rule describes the structure of a frame, for example the source or destination address. Possible actions are, but not limited to, to output a frame on a specific tunnel endpoint or to forward a frame to the isolation switch controller. If a frame does not match any rule, it is forwarded to the isolation switch controller by default. Control messages originating from the virtual APs are by default forwarded to the isolation switch controller 6.

Messages between the isolation switch and the isolation switch controller are exchanged using a switch control protocol 5. In present embodiment the OpenFlow protocol is preferred. The isolation switch can, but is not limited to, implement tasks like traffic shaping and scheduling.

The isolation switch controller includes control plane logic. In particular it includes at least one application that decides how to forward data frames. In addition, the application executes a policy that specifies how to modify control messages and to forward them. For example, if the isolation switch controller receives a control message that specifies to change the channel on a wireless interface card, it can decide to forward this message to the network card control daemon of the respective wireless interface card or to drop this message. The policy can be configured by a network administrator or created dynamically during the system run time by an external system.

The isolation switch is connected to one or several virtual machine hosts via the second tunnels 7. Those second tunnels 7 have the same functionality as the first tunnels 3.

A virtual machine host 8 is a general purpose computer that executes an operating system virtualization system such as KVM or Xen. A virtual machine host hosts one or several virtual access points.

The functionality of Wireless Termination Points and Virtual Access Points will be described in detail below.

### Wireless Termination Point

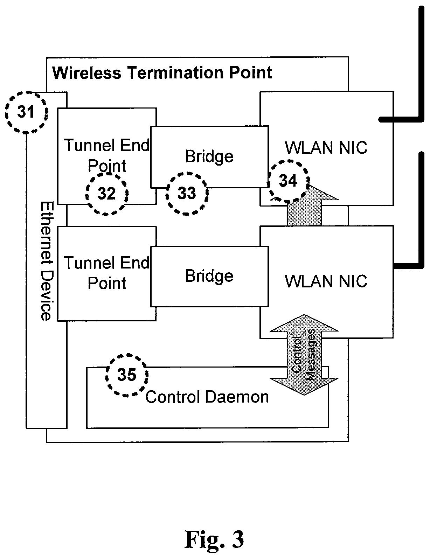

A wireless termination point, as depicted in Fig. 3, is a multi-purpose computer or an embedded system that includes at least one wireless network interface card 34 and one tunnel endpoint 32. The wireless network interface card 34 preferably supports the IEEE 802.11 standard. It includes base band processing units and can send and receive MAC frames. Furthermore, the wireless network interface card includes a register of link layer addresses. If it receives a frame destined to one of the addresses in the register, it generates and sends an ACK frame. In an alternative embodiment the ACK frame is generated by the VAP.

The WTP runs preferably on a general purpose operating system such as Linux or a specialized embedded operating system. The operating system, through a device driver and a tunnel, can receive frames from the fixed network interface card 31 and can hand over frames to the wireless network card for transmission. The wireless network interface card is connected to a tunnel endpoint via a bridge 33. The bridge simply forwards frames between the wireless network interface card and the tunnel endpoint. Each frame has a control header that the wireless network interface card can read and remove prior to transmission. The control header includes information about how to transmit the frame.

Each wireless network interface card furthermore is connected to a network card control daemon 35. This control daemon receives control messages, for example to change the channel of the card, translates them into an operating system routine call and issues the respective operating system routine.

### Virtual Access Points

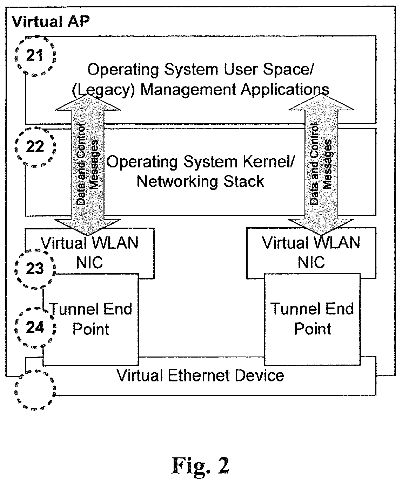

A virtual access point, as show in Fig. 2, is a virtual machine that executes an access point firmware/operating system such as OpenWRT. The operating system provides a networking stack 22 and user space applications 21. A virtual access point furthermore comprises one or several tunnel endpoints 24 and virtual wireless network interface cards 23. The tunnels serve the same purpose as in the WTP. The virtual wireless network interface card is a software driver that appears to the operating system networking subsystem and to the respective user space applications like a physical wireless network card. As the configuration API of the virtual wireless network interface is identical to the driver of a physical wireless network interface cards, standard wireless network management software, for example to provide access control, can be used.

The virtual wireless network interface 23 can receive data packets from the networking stack of the operating system 22 and add the link layer headers for the wireless LAN technology, e.g. IEEE 802.11. In addition a control header is added to each frame. The control header specifies transmission instructions for the WTP. Such transmission instructions can include (but are not limited to) the modulation and coding scheme, the transmission power and the antenna that should be used for the transmission by the WTP.

The virtual wireless network interface card can furthermore receive control messages from operating system calls and standard WLAN management APIs. For example, a user space application could request the virtual WLAN card to change its channel. The virtual WLAN card 23 creates a control message and sends this message to the isolation switch controller. The isolation switch controller then decides whether the channel change operation is permitted according to its policy. If it is permitted, the control message is forwarded to the WTP, in which the network interface card controller, i.e. the NIC controller, decodes the control message and changes the channel accordingly.

### Examples

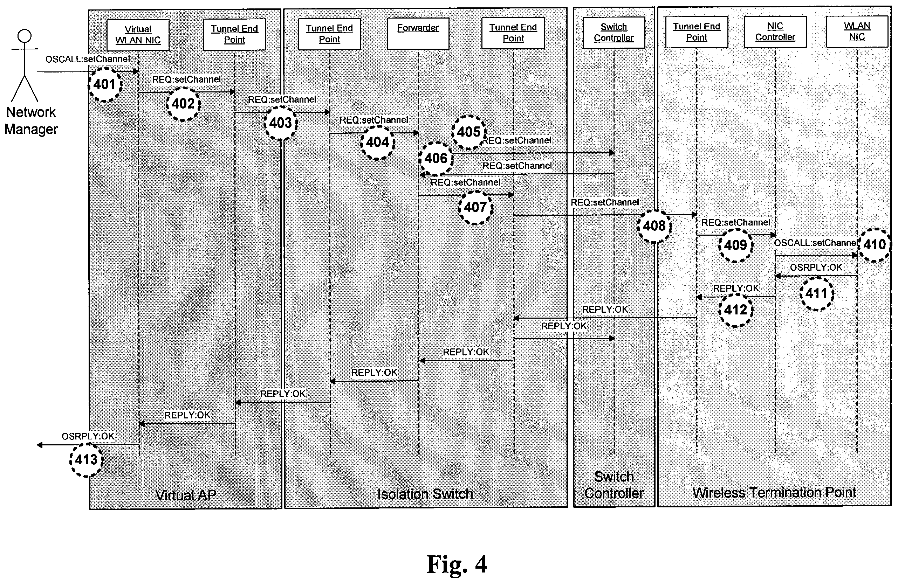

Figure 4 shows the sequence of messages exchanged on the control plane. Control command requests are issued by a network management application or the network administrator using standard operating system tools 401. Control command requests for example specify the channel or the transmission power of the AP. The requests are sent to the virtual network WLAN NIC driver via standard operating system routines, e.g. for example I/O control calls or Netlink messages. The WLAN NIC driver receives those messages, e.g. a OSCALL setChannel to set the channel of a card. The driver then encapsulates this message into a control frame, REQ:setChannel, 402 and forwards it to the tunnel endpoint. The tunnel endpoint encapsulates the control frame into an IP packet 403 and sends it via the distribution network to the isolation switch 404. At the tunnel end point of the isolation switch the message is de-capsulated and forwarded to the isolation switch controller 405. The isolation switch controller determines, based on its policy, if the command specified in the control message is permitted. If it is permitted, the command is returned to the switch 406 which then forwards it via a tunnel 407 and 408 to the appropriate NIC control daemon 409. The control daemon subsequently translates the message to an operating system call and sends this operating system call to the WLAN NIC driver 410. The WLAN NIC driver executes the command (e.g. setChannel) and returns the result to the NIC controller 411. The result is then encapsulated into a control frame, which is returned back to the virtual WLAN NIC 412. The virtual WLAN NIC updates its status (sets the "virtual" channel) and returns an OK answer to the network manager via an OS call. If several virtual WLAN NICs are connected to the respective physical WLAN NIC, the isolation switch command informs all connected cards about the change.

If at step 405 the switch controller determines that the command is not permitted, it can send an error message back to the virtual AP.

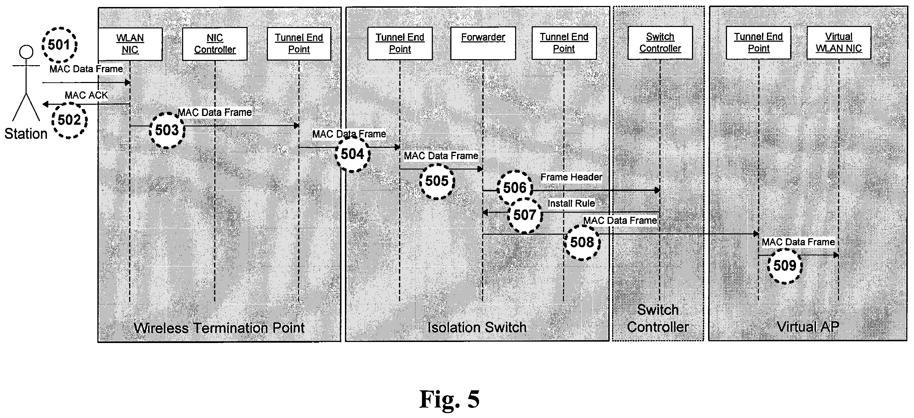

Figure 5 depicts the sequence of message exchanged on the data plane. In this example the user station wants to transmit a frame to the VAP. The user station, e.g. an IEEE 802.11 STA, first transmits a data frame to the WLAN NIC of the wireless termination point 501 using for example the IEEE 802.11 PHY layer standard. According to the IEEE 802.11 protocol, the WLAN NIC has to almost immediately, typically within a Short Inter-frame Spacing Period, answer with an ACK frame upon the successful reception of a frame 502. The WLAN NIC then forwards the MAC data frame to the tunnel endpoint 503, which encapsulates the frame and transmits it via the distribution network to the isolation switch 504. The frame is decapsulated, i.e. tunnel protocol headers are removed, at the tunnel endpoint of the isolation switch 505 and sent to a forwarding unit. The forwarding unit searches for appropriate rules in the forwarding table. If the forwarding table has a rule for handling the frame, this rule is executed. If not, the frame is sent to the switch controller 506. The switch controller inspects the frame header and decides on which tunnel endpoint the frame needs to be sent. It is evident here, that this decision creates the binding between the virtual NIC and the WLAN NIC at the WTP. A rule is then installed on the forwarder 507 and the packet is sent to the virtual AP 508 via a tunnel. For subsequent frames with the same VAP/WTP binding an appropriate rule is now established and the switch controller does not need to be consulted in future.

The virtual AP decapsulates the frame and hands it over to the virtual WLAN NIC 509. The virtual WLAN NIC calls the respective operating system routines to process the packet further, e.g. to send it to a user space application etc..

Sending a frame from the VAP to a user station follows the same sequence as above, just in reverse order. The VAP generates a MAC frame and sends it via tunnels and the isolation switch to the WTP. The WTP then transmits this frame wirelessly to the user station using its WLAN card.

The process of forwarding frames between the WTP and the VAP is oblivious to encryption that might be applied on the link layer, such as WEP, Wired Equivalent Privacy, or IEEE 802.11i. With those encryption standards, frames payloads are encrypted and decrypted by the user station and the VAP. The forwarding decisions taken by the isolation switch are based unencrypted header information, such as source and destination addresses.

Except a list of MAC addresses, the WLAN NIC of the wireless termination point does not include any state information regarding which virtual NICs are bound to it. The binding information is kept at the switch controller. Upon creating or changing such a binding, the switch controller instructs the NIC control daemon to update the list of MAC addresses accordingly. As several virtual WLAN NICs, e.g. identified by their MAC addresses, can be bound to one physical WLAN NIC, one wireless termination point can serve several basic service sets at the same time.

### Usage Example

The present invention and its embodiments simplify applications, which are hard to provide with state-of-the-art WLAN management solutions. Consider for example a WLAN energy saving system, which switches off APs if the network load is low. In some situations there might be only a small number of STA associated to one AP. Those STA could also use a close-by AP without experiencing lower performance. However, with traditional WLAN management solutions switching of an AP would cause all associated STA to lose connectivity. A lengthy re-association process to a new AP might follow, which negatively impacts user experience.

In comparison, the present invention allows to move the traffic of a virtual AP from one WTP to another WTP seamlessly by reconfiguring the forwarding rules in the isolation switch and the register of MAC addresses at the target WTP. Thereby, one can move all APs served via one WTP to other WTPs and then switch off the WTP.

The present invention has been described with reference to several embodiments thereof. The foregoing detailed description and examples have been given for clarity of understanding only. No unnecessary limitations are to be understood therefore. It will be apparent to those skilled in the art that many changes can be made in the embodiments described without departing from the scope of the present invention, as defined by the claims. In particular, although features and elements of the present invention are described in the preferred embodiments, in particular combinations, each feature or element can be used alone without the other features and elements of the preferred embodiments or in various combinations with or without other features and elements of the invention, as defined by the claims. Therefore, the scope of the present invention should not be limited to the methods and systems described herein, but rather to the subject matter of the claims.

## Claims

1. System for providing of control plane and data plane in a WLAN, comprising:
a physical access point providing data connectivity for a user equipment,
wherein the physical access point comprises one or more wireless termination points (1),
at least one virtual access point (13) being configured to control the data connectivity,
wherein the at least one virtual access point (13) is a virtual machine that is configured to execute an access point firmware/operating system,
an isolation layer (12) connected with the physical access point and the virtual access point (13),
wherein the isolation layer (12) comprises an isolation switch (4) and an isolation switch controller (6),
wherein the isolation layer (12) is configured to handle data frames in the data plane and control messages in the control plane between the physical access point and the virtual access point (13),
wherein the control messages are to configure WLAN cards on a wireless termination point (1),
wherein the isolation switch (4) is connected with the isolation switch controller (6) via a switch control connection (5) using a switch control protocol,
wherein the isolation switch (4) is configured to perform said handling of the data frames and the control messages according to rules defined by the isolation switch controller (6),
wherein the virtual access point (13) comprises a virtual wireless network interface card (23),
wherein the virtual wireless network interface card (23) is configured to create the control messages including an operational change instruction which is an instruction to change a channel, and to forward the control messages to the isolation switch controller (6), and
wherein the isolation switch controller (6) is configured to process the control messages, and if allowed, to forward the control messages to the physical access point for performing the operational change.

2. System according to claim 1,
wherein the isolation layer (12) is connected with the physical access point via a first tunnel (3) and a first distribution network (2), and
wherein the isolation layer (12) is connected with the virtual access point via a second tunnel (7) and a second distribution network (9).

3. System according to claim 1 or 2,
wherein the virtual access point is running on one or more virtual machine hosts (8).

4. System according to claim 1 or 3,
wherein the wireless termination point (1) comprises at least one wireless network interface card (34) and a tunnel endpoint (32) being connected via a bridge (33), and
wherein the wireless network interface card (34) is connected to a network card control daemon (35).

5. System according to any one of preceding claims,
wherein the physical access point is configured to remove a control header prior to sending the data frames to the user equipment.

6. System according to any one of preceding claims,
wherein the isolation switch controller (6) is configured to process the control messages according to a predetermined operation policy.

7. System according to claim 6,
wherein the virtual wireless network interface card (23) comprises an Application Programming Interface enabling communication with additional software components.

8. System according to any one of claims 1, or 3 to 7,
wherein the isolation switch (4) is configured to distinguish the control messages and the data frame, and to forward the control messages to the isolation switch controller (6).

9. Method for providing of control plane and data plane in a WLAN using the system according to any one of claims 1 to 8, wherein the method comprises the steps of:
providing data connectivity for the user equipment by the physical access point,
controlling the data connectivity by the at least one virtual access point (13),
handling the data frames in the data plane and the control messages in the control plane between the physical access point and the virtual access point (13), by the isolation layer (12),
performing said handling of the data frames and the control messages according to the rules defined by the isolation switch controller (6), by the isolation switch (4),
creating the control messages including the operational change instruction, which is the instruction to change the channel, and forwarding the control messages to the isolation switch controller (6), by the virtual wireless network interface card (23), and
processing the control messages, and if allowed, forwarding the control messages to the physical access point for performing the operational change, by the isolation switch controller (6).

10. Method according to claim 9, wherein the method further comprises removing the control header prior to sending the data frames to the user equipment, by the physical access point.

11. Method according to any one of claims 9 and 10, wherein the method further comprises processing the control messages according to a predetermined operation policy by the isolation switch controller (6).

12. Method according to claim 11,
wherein the virtual wireless network interface card (23) comprises an Application Programming Interface enabling communication with additional software components.

13. Method according to any one of claims 9 to 12, further comprising the steps of:
distinguishing the control messages and the data frame, and forwarding the control messages to the isolation switch controller (6) by the isolation switch (4).

## Patentansprüche

1. System zum Bereitstellen einer Steuerungsebene und einer Datenebene in einem WLAN aufweisend:
einen physikalischen Zugangspunkt, der eine Datenkonnektivität für ein Benutzerendgerät bereitstellt,
wobei der physikalische Zugangspunkt einen oder mehrere drahtlose Anschlusspunkte (1) aufweist,
wobei mindestens ein virtueller Zugangspunkt (13) ausgebildet ist, die Datenkonnektivität zu steuern,
wobei der mindestens eine virtuelle Zugangspunkt (13) eine virtuelle Maschine ist, die ausgebildet ist, ein(e) Zugangspunkt-Firmware/-Betriebssystem auszuführen,
eine Isolierschicht (12), die mit dem physikalischen Zugangspunkt und dem virtuellen Zugangspunkt (13) verbunden ist,
wobei die Isolierschicht (12) einen Isolierschalter (4) und eine Isolierschaltersteuerung (6) aufweist,
wobei die Isolierschicht (12) ausgebildet ist, Datenrahmen in der Datenebene zu verarbeiten und Steuerungsnachrichten in der Steuerungsebene zwischen dem physikalischen Zugangspunkt und dem virtuellen Zugangspunkt (13) zu steuern,
wobei die Steuerungsnachrichten zum Konfigurieren von WLAN-Karten an einem drahtlosen Zugangspunkt (1) eingerichtet sind,
wobei der Isolierschalter (4) mit der Isolierschaltersteuerung (6) über eine Schaltersteuerungsverbindung (5) unter Verwendung eines Schaltersteuerungsprotokolls verbunden ist,
wobei der Isolierschalter (4) ausgebildet ist, die Verarbeitung der Datenrahmen und der Steuerungsnachrichten gemäß Regeln durchzuführen, die von der Isolierschaltersteuerung (6) definiert werden,
wobei der virtuelle Zugangspunkt (13) eine virtuelle drahtlose Netzwerkschnittstellenkarte (23) aufweist,
wobei die virtuelle drahtlose Netzwerkschnittstellenkarte (23) ausgebildet ist, die Steuerungsnachrichten einschließlich einer Betriebsänderungsinstruktion zu erzeugen, die eine Instruktion zur Änderung eines Kanals ist, und die Steuerungsnachrichten zur Isolierschaltersteuerung (6) zu leiten, und
wobei die Isolierschaltersteuerung (6) ausgebildet ist, die Steuerungsnachrichten zu verarbeiten und, wenn zulässig, die Steuerungsnachrichten zum physikalischen Zugangspunkt zu leiten, um die Betriebsänderung durchzuführen.

2. System nach Anspruch 1,
wobei die Isolierschicht (12) mit dem physikalischen Zugangspunkt über einen ersten Tunnel (3) und ein erstes Verteilungsnetzwerk (2) verbunden ist, und
wobei die Isolierschicht (12) mit dem virtuellen Zugangspunkt über einen zweiten Tunnel (7) und ein zweites Verteilungsnetzwerk (9) verbunden ist.

3. System nach Anspruch 1 oder 2,
wobei der virtuelle Zugangspunkt auf einem oder mehreren virtuellen Maschinenhosts (8) läuft.

4. System nach Anspruch 1 oder 3,
wobei der drahtlose Anschlusspunkt (1) mindestens eine drahtlose Netzwerkschnittstellenkarte (34) und einen über eine Brücke (33) verbundenen Tunnelendpunkt (32) aufweist, und
wobei die drahtlose Netzwerkschnittstellenkarte (34) mit einem Netzwerkkarten-Steuerungsdämon (35) verbunden ist.

5. System nach einem der vorhergehenden Ansprüche,
wobei der physikalische Zugangspunkt ausgebildet ist, vor dem Senden der Datenrahmen zum Benutzerendgerät einen Steuerungsheader zu entfernen.

6. System nach einem der vorhergehenden Ansprüche,
wobei die Isolierschaltersteuerung (6) ausgebildet ist, die Steuerungsnachrichten gemäß einer vorgegebenen Betriebsrichtlinie zu verarbeiten.

7. System nach Anspruch 6,
wobei die virtuelle drahtlose Netzwerkschnittstellenkarte (23) eine Anwendungsprogrammierschnittstelle aufweist, die eine Kommunikation mit zusätzlichen Softwarekomponenten ermöglicht.

8. System nach einem der Ansprüche 1 oder 3 bis 7,
wobei der Isolierschalter (4) ausgebildet ist, zwischen den Steuerungsnachrichten und dem Datenrahmen zu unterscheiden, und die Steuerungsnachrichten zur Isolierschaltersteuerung (6) zu leiten.

9. Verfahren zum Bereitstellen einer Steuerungsebene und einer Datenebene in einem WLAN unter Verwendung des Systems nach einem der Ansprüche 1 bis 8, wobei das Verfahren die folgenden Schritte aufweist:
Bereitstellen einer Datenkonnektivität für das Benutzerendgerät durch den physikalischen Zugangspunkt,
Steuern der Datenkonnektivität durch den mindestens einen virtuellen Zugangspunkt (13),
Verarbeiten der Datenrahmen in der Datenebene und der Steuerungsnachrichten in der Steuerungsebene zwischen dem physikalischen Zugangspunkt und dem virtuellen Zugangspunkt (13) durch die Isolierschicht (12),
Durchführen der Verarbeitung der Datenrahmen und der Steuerungsnachrichten gemäß der von der Isolierschaltersteuerung (6) definierten Regeln durch den Isolierschalter (4),
Erzeugen der Steuerungsnachrichten einschließlich der Betriebsänderungsinstruktion, die die Instruktion zur Änderung des Kanals ist, und Leiten der Steuerungsnachrichten an die Isolierschaltersteuerung (6) durch die virtuelle drahtlose Netzwerkschnittstellenkarte (23), und
Verarbeiten der Steuerungsnachrichten und, wenn zulässig, Leiten der Steuerungsnachrichten zum physikalischen Zugangspunkt, um die Betriebsänderung durchzuführen, durch die Isolierschaltersteuerung (6).

10. Verfahren nach Anspruch 9, wobei das Verfahren ferner das Entfernen des Steuerungsheaders vor dem Senden der Datenrahmen zum Benutzerendgerät durch den physikalischen Zugangspunkt aufweist.

11. Verfahren nach einem der Ansprüche 9 und 10, wobei das Verfahren ferner das Verarbeiten der Steuerungsnachrichten gemäß einer vorbestimmten Betriebsrichtlinie durch die Isolierschaltersteuerung (6) aufweist.

12. Verfahren nach Anspruch 11,
wobei die virtuelle drahtlose Netzwerkschnittstellenkarte (23) eine Anwendungsprogrammierschnittstelle aufweist, die eine Kommunikation mit zusätzlichen Softwarekomponenten ermöglicht.

13. Verfahren nach einem der Ansprüche 9 bis 12, das ferner die folgenden Schritte aufweist: Unterscheiden zwischen den Steuerungsnachrichten und dem Datenrahmen und Leiten der Steuerungsnachrichten zur Isolierschaltersteuerung (6) durch den Isolierschalter (4).

## Revendications

1. Système pour la fourniture de plan de contrôle et de plan de données dans un WLAN, comprenant :
un point d'accès physique fournissant une connectivité de données pour un équipement utilisateur,
dans lequel le point d'accès physique comprend un ou plusieurs points de terminaison sans fil (1),
au moins un point d'accès virtuel (13) étant configuré pour contrôler la connectivité de données,
dans lequel l'au moins un point d'accès virtuel (13) est une machine virtuelle qui est configurée pour exécuter un micrologiciel/système d'exploitation de point d'accès,
une couche d'isolement (12) connectée avec le point d'accès physique et le point d'accès virtuel (13),
dans lequel la couche d'isolement (12) comprend un commutateur d'isolement (4) et un contrôleur de commutateur d'isolement (6),
dans lequel la couche d'isolement (12) est configurée pour prendre en charge des trames de données dans le plan de données et des messages de contrôle dans le plan de contrôle entre le point d'accès physique et le point d'accès virtuel (13),
dans lequel les messages de contrôle doivent configurer des cartes WLAN sur un point de terminaison sans fil (1),
dans lequel le commutateur d'isolement (4) est connecté avec le contrôleur de commutateur d'isolement (6) via une connexion de contrôle de commutateur (5) utilisant un protocole de contrôle de commutateur,
dans lequel le commutateur d'isolement (4) est configuré pour effectuer ladite prise en charge des trames de données et des messages de contrôle selon des règles définies par le contrôleur de commutateur d'isolement (6),
dans lequel le point d'accès virtuel (13) comprend une carte d'interface de réseau sans fil virtuel (23),
dans lequel la carte d'interface de réseau sans fil virtuel (23) est configurée pour créer les messages de contrôle incluant une instruction de changement opérationnel qui est une instruction pour changer un canal, et pour transférer les messages de contrôle au contrôleur de commutateur d'isolement (6), et
dans lequel le contrôleur de commutateur d'isolement (6) est configuré pour traiter les messages de contrôle, et si autorisé, pour transférer les messages de contrôle au point d'accès physique pour effectuer le changement opérationnel.

2. Système selon la revendication 1,
dans lequel la couche d'isolement (12) est connectée avec le point d'accès physique via un premier tunnel (3) et un premier réseau de distribution (2), et
dans lequel la couche d'isolement (12) est connectée avec le point d'accès virtuel via un second tunnel (7) et un second réseau de distribution (9).

3. Système selon la revendication 1 ou 2,
dans lequel le point d'accès virtuel s'exécute sur un ou plusieurs hôtes de machine virtuelle (8).

4. Système selon la revendication 1 ou 3,
dans lequel le point de terminaison sans fil (1) comprend au moins une carte d'interface de réseau sans fil (34) et un point d'extrémité de tunnel (32) qui sont connectés via un pont (33), et
dans lequel la carte d'interface de réseau sans fil (34) est connectée à un démon de contrôle de carte réseau (35).

5. Système selon l'une quelconque des revendications précédentes,
dans lequel le point d'accès physique est configuré pour supprimer un en-tête de contrôle avant l'envoi des trames de données à l'équipement utilisateur.

6. Système selon l'une quelconque des revendications précédentes,
dans lequel le contrôleur de commutateur d'isolement (6) est configuré pour traiter les messages de contrôle selon une politique d'opération prédéterminée.

7. Système selon la revendication 6,
dans lequel la carte d'interface de réseau sans fil virtuel (23) comprend une Interface de Programmation d'Application permettant la communication avec des composants logiciels additionnels.

8. Système selon l'une quelconque des revendications 1, ou 3 à 7,
dans lequel le commutateur d'isolement (4) est configuré pour distinguer les messages de contrôle et la trame de données, et pour transférer les messages de contrôle au contrôleur de commutateur d'isolement (6).

9. Procédé pour la fourniture de plan de contrôle et de plan de données dans un WLAN utilisant le système selon l'une quelconque des revendications 1 à 8, dans lequel le procédé comprend les étapes de :
fournir une connectivité de données pour l'équipement utilisateur par le point d'accès physique,
contrôler la connectivité de données par l'au moins un point d'accès virtuel (13),
prendre en charge les trames de données dans le plan de données et les messages de contrôle dans le plan de contrôle entre le point d'accès physique et le point d'accès virtuel (13), par la couche d'isolement (12),
effectuer ladite prise en charge des trames de données et des messages de contrôle selon les règles définies par le contrôleur de commutateur d'isolement (6), par le commutateur, d'isolement (4),
créer les messages de contrôle incluant l'instruction de changement opérationnel, qui est l'instruction pour changer le canal, et transférer les messages de contrôle au contrôleur de commutateur d'isolement (6), par la carte d'interface de réseau sans fil virtuel (23), et
traiter les messages de contrôle, et si autorisé, transférer les messages de contrôle au point d'accès physique pour effectuer le changement opérationnel, par le contrôleur de commutateur d'isolement (6)

10. Procédé selon la revendication 9, dans lequel le procédé comprend en outre
supprimant l'en-tête de contrôle avant l'envoi des trames de données à l'équipement utilisateur, par le point d'accès physique.

11. Procédé selon l'une quelconque des revendication 9 et 10, dans lequel le procédé comprend en outre le traitement des messages de contrôle selon une politique d'opération prédéterminée par le contrôleur de commutateur d'isolement (6).

12. Procédé selon la revendication 11,
dans lequel la carte d'interface de réseau sans fil virtuel (23) comprend une Interface de Programmation d'Application permettant la communication avec des composants logiciels additionnels.

13. Procédé selon l'une quelconque des revendications 9 à 12, comprenant en outre les étapes de :
distinguer les messages de contrôle et la trame de données, et transférer les messages de contrôle au contrôleur de commutateur d'isolement (6) par le commutateur d'isolement (4).
